(19) **Europäisches Patentamt / European Patent Office / Office européen des brevets**

(11) **EP 2 990 824 B1**

(12) **FASCICULE DE BREVET EUROPEEN**

(45) Date de publication et mention de la délivrance du brevet:
**20.12.2017 Bulletin 2017/51**

(51) Int Cl.:
**G01S 15/58** *(2006.01)* **G01S 15/60** *(2006.01)*

(21) Numéro de dépôt: **15181998.4**

(22) Date de dépôt: **21.08.2015**

(54) **PROCÉDÉ ET DISPOSITIF SONAR DE DÉTERMINATION DE LA VITESSE DE DÉPLACEMENT D'UN VÉHICULE NAVAL PAR RAPPORT AU FOND MARIN**

SONAR-VERFAHREN UND -VORRICHTUNG ZUR BESTIMMUNG DER BEWEGUNGSGESCHWINDIGKEIT EINES NAUTISCHEN FAHRZEUGS IN BEZUG ZUM MEERESBODEN

SONAR METHOD AND DEVICE FOR DETERMINING THE SPEED OF MOVEMENT OF A MARINE VEHICLE RELATIVE TO THE SEABED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2014 FR 1457951**

(43) Date de publication de la demande:
**02.03.2016 Bulletin 2016/09**

(73) Titulaire: **ECA Robotics**
**83130 La Garde (FR)**

(72) Inventeur: **PINTO, Marc**
**92210 Saint-Cloud (FR)**

(74) Mandataire: **Santarelli**
**49, avenue des Champs-Elysées**
**75008 Paris (FR)**

(56) Documents cités:
**WO-A1-89/04975 US-A1- 2004 165 479**
**US-A1- 2014 126 333**

**Description**

La présente invention concerne le domaine des instruments de navigation maritime permettant d'estimer la vitesse de déplacement d'un véhicule naval par rapport au fond marin. De tels instruments sont appelés « lochs ».

Plus particulièrement, l'invention concerne les lochs acoustiques permettant de calculer la vitesse du véhicule naval à partir d'émissions sonar consécutives et des séries temporelles correspondantes de signaux d'échos de fond reçus par un réseau de récepteurs formant une antenne.

Généralement, un loch acoustique pour véhicule naval comporte au moins un émetteur envoyant un signal dans une région du fond marin et au moins un récepteur destiné à recevoir des signaux réfléchis ou échos de fond marin rétrodiffusés. Le loch acoustique peut comporter également un ou plusieurs transducteurs faisant office d'éléments émetteurs et récepteurs permettant d'émettre et de recevoir des signaux acoustiques.

Il existe différents types de lochs acoustiques :

- Les lochs acoustiques dits « à corrélation spatiale» (voir, par exemple, les documents WO 89/04975 et US 2004/165479) déterminent la valeur de la vitesse du véhicule naval en comparant les échos du fond marin reçus sur tous les récepteurs d'une antenne pour deux impulsions émises consécutives. Pour cela, on définit pour chaque paire émetteur/récepteur, un centre de phase correspondant au point géométrique milieu entre l'émission et la réception. On détermine la paire de centres de phase pour laquelle la corrélation des échos de fond marin est maximale. On utilise ensuite cette paire pour déterminer la vitesse de déplacement du véhicule naval qui est fonction de la distance mesurée entre les deux centres de phase de ladite paire utilisée et de la durée connue entre les deux émissions.

Toutefois, un tel principe fonctionne bien uniquement si la vitesse du véhicule est colinéaire à un axe de l'antenne portée par le véhicule naval. Dans le cas d'un véhicule naval lancé à vitesse élevée, sa vitesse de déplacement est généralement principalement orientée le long de l'axe du véhicule qui coïncide généralement avec un axe de l'antenne. Toutefois, en présence de courants transverses ou dans le cas d'une faible vitesse de déplacement, le vecteur vitesse comporte également des composantes perpendiculaires à l'antenne. Il apparait alors des erreurs de mesure dans toutes les composantes du déplacement et notamment celles dans les directions parallèles à l'antenne, lorsque celle-ci n'est pas parallèle au fond marin mais fait un angle d'assiette relative avec celui-ci. Ceci engendre alors des erreurs de projection qu'il n'est pas possible de corriger car l'assiette relative reste inconnue pour les lochs actuels.

Les lochs acoustiques à corrélation spatiale actuels ne permettent donc pas une détermination précise de la vitesse de déplacement du véhicule naval. En effet, ce problème de précision provient du fait que les lochs à corrélation spatiale sont dépourvus de techniques de localisation angulaire des échos de fond. Les échos de fond utilisés par le loch pour le calcul de la vitesse du véhicule naval ne sont pas bien localisés angulairement, engendrant des erreurs de projection et donc un biais entre la vitesse réelle du véhicule naval et la vitesse calculée par le loch. De tels biais sont particulièrement nuisibles à la précision de la navigation lorsque l'information de vitesse du véhicule naval est combinée avec une centrale inertielle.

- Les lochs acoustiques dits « à effet Doppler » (voir, par exemple, le document US 2014/126333) permettent une estimation de la vitesse du véhicule naval par rapport au milieu environnant et utilisent la mesure du décalage de fréquence des échos rétrodiffusés du fond marin. Les lochs Doppler actuels sont dits « à large bande » car ils utilisent des émissions avec une large bande passante relative. De tels lochs émettent une rafale d'impulsions courtes, ou bien modulées en phase ou en fréquence, et utilisent une corrélation temporelle pour déterminer la différence de phase entre les échos de fond de deux impulsions successives. On en déduit ensuite la vitesse de déplacement du véhicule.

Le loch à effet Doppler à large bande peut donc être assimilé à un loch à corrélation spatiale avec un centre de phase unique. Ce centre de phase ne peut donc pas être déplacé entre deux émissions successives pour maximiser la corrélation. Il en résulte un étalement important du spectre Doppler et donc une incertitude considérable dans la mesure du décalage Doppler recherché et donc de la mesure de la vitesse. Les lochs Doppler actuels cherchent à réduire cette incertitude en identifiant le décalage Doppler recherché avec le barycentre du spectre Doppler, mais la mesure devient alors très sensible aux variations d'amplitude des échos de fond, très difficiles à prévoir. Ainsi les variations des pertes de propagation acoustique dues à la méconnaissance des conditions océanographiques, et les variations de réflectivité du fond marin, dues aux pentes locales de ce fond, engendrent des biais importants dans la détermination de la vitesse de déplacement. Pour réduire ces biais, de tels lochs utilisent des faisceaux très fins ce qui nécessite soit des fréquences d'opérations élevées qui engendrent une limitation de la portée, soit un encombrement excessif incompatible avec de nombreuses plateformes navales et notamment les petits véhicules autonomes.

Les lochs acoustiques actuels ont donc soit des problèmes de précision, soit des problèmes de portée pour un encombrement donné. Il existe donc un besoin de fournir un loch acoustique permettant à la fois d'obtenir une précision accrue de la détermination de la vitesse de déplacement sans limiter la portée.

Le but de la présente invention est de pallier les inconvénients des lochs acoustiques de l'état de la technique.

L'objectif de l'invention est donc de fournir un procédé et un dispositif de détermination de la vitesse de déplacement d'un véhicule naval par rapport au fond marin précis et fiable, sans pour autant en limiter sa portée et tout en maintenant un encombrement compatible avec les plateformes navales existantes.

En d'autres termes, le but de l'invention est d'améliorer les lochs acoustiques actuels, notamment les lochs acoustiques dits à corrélation spatiale et les lochs dits à effet Doppler, qui utilisent tous les deux les principes de corrélation acoustique spatio-temporelle.

L'invention a ainsi pour objet un sonar destiné à être porté par un véhicule naval comprenant au moins un dispositif de détermination de la vitesse de déplacement du véhicule naval par rapport au fond marin, de type loch à corrélation acoustique. Ledit dispositif de détermination de la vitesse de déplacement du véhicule naval comporte au moins un moyen d'émission d'un signal acoustique, et au moins un moyen de réception dudit signal acoustique émis et réfléchi sur le fond marin.

Chaque lieu géométrique milieu entre le point d'émission et le point de réception forme un centre de phase. Le dispositif de détermination de la vitesse de déplacement du véhicule naval comprend des moyens de mesure du déplacement du centre de phase.

Le sonar comprend au moins deux centres de phases, le premier centre de phase étant disposé suivant un premier axe et le deuxième centre de phase étant disposé suivant un deuxième axe parallèle au premier axe.

Le dispositif de détermination de la vitesse de déplacement du véhicule naval comprend aussi des moyens de détermination de l'angle d'assiette relative au fond formé entre une droite perpendiculaire aux axes des centres de phase et une droite perpendiculaire au fond marin, des moyens de détermination de l'angle de visée, formé entre la base interférométrique et la direction d'arrivée des échos de fond pour la distance considérée, et des moyens de détermination de la vitesse de déplacement du véhicule en fonction desdits angles déterminés.

L'invention propose ainsi de calculer la vitesse du véhicule naval en utilisant une combinaison de techniques de corrélation des lochs actuels avec des techniques de localisation angulaire des échos de fond obtenus par l'emploi d'une antenne sonar interférométrique. Ceci permet ainsi de diminuer, voire supprimer, les erreurs de projection des lochs à corrélation acoustiques actuels sans recourir à l'utilisation de faisceaux excessivement fins. En effet, aucun des lochs acoustiques actuels n'utilise d'antenne interférométrique pour améliorer la précision de la mesure de la vitesse du véhicule naval relativement au fond marin.

Avantageusement, le sonar comprend un moyen d'émission du signal acoustique et deux moyens de réception dudit signal acoustique émis et réfléchi sur le fond marin de manière à former une antenne interférométrique. Chaque lieu géométrique milieu entre le point d'émission et chaque point de réception forme ainsi un centre de phase.

On notera que l'invention ne se limite pas à l'utilisation d'un moyen d'émission et de deux moyens de réception et concerne de manière générale toute antenne comportant deux centres de phase. En effet, l'homme du métier pourrait adapter l'invention à un sonar comportant deux moyens d'émission et au moins un moyen de réception placés de manière à obtenir les deux mêmes centres de phase. Il lui suffit de mettre les deux moyens d'émission à la même position que les deux moyens de réception précédents et le moyen de réception à la place du moyen d'émission précédent.

Avantageusement, les moyens de détermination de l'angle d'assiette relative au fond comprennent des moyens de comparaison des centres de phase des deux moyens de réception pour une seule émission afin de retenir les paires pour lesquelles la corrélation est maximale, des moyens pour mesurer la distance entre le deuxième centre de phase et la projection orthogonale du premier centre de phase sur le deuxième axe, l'angle d'assiette relative au fond étant fonction de ladite distance mesurée et de la longueur connue de la base interférométrique.

Les moyens de détermination de la vitesse de déplacement du véhicule comprennent, par exemple, des moyens de calcul d'un vecteur vitesse selon l'axe longitudinal en fonction de la projetée sur l'axe longitudinal de ladite distance entre ces deux centres de phase et de la durée entre les deux émissions, la projetée sur l'axe longitudinal de ladite distance entre les deux centres de phase étant fonction de l'angle d'assiette relative au fond.

Avantageusement, les moyens de détermination de la vitesse de déplacement du véhicule comprennent des moyens de calcul de la projetée du déplacement sur l'axe de visée en fonction de l'angle d'assiette relative, de l'angle de visée et de la longueur de la base interférométrique.

Dans un autre mode de réalisation, le sonar comprend un nombre de moyens de réception supérieur à deux et des moyens de combinaison des paires de centres de phase pour améliorer la précision.

Les moyens de réception peuvent être des antennes de type linéaire, planaire, conformée ou volumétrique.

Les moyens de réception peuvent être des antennes de type physique ou synthétique.

L'antenne synthétique peut être, par exemple, formée par deux antennes physiques en configuration interférométrique.

Dans un autre mode de réalisation, le sonar comprend au moins deux dispositifs de détermination de la vitesse de déplacement du véhicule naval par rapport au fond marin tels que définis ci-dessus, chaque dispositif de détermination de la vitesse de déplacement comprenant des axes de visée indépendants.

Selon un autre aspect, l'invention concerne un système comprenant un sonar tel que défini précédemment et une centrale inertielle. La centrale inertielle peut, par exemple, comprendre un gyroscope.

Selon un autre aspect, l'invention concerne un procédé de détermination de la vitesse de déplacement d'un véhicule naval par rapport au fond marin comportant un dispositif de détermination de la vitesse de déplacement, de type loch à corrélation acoustique, dans lequel on émet au moins un signal acoustique, et l'on réceptionne par au moins un moyen de réception ledit signal acoustique émis et réfléchi sur le fond marin, le lieu géométrique milieu entre le point d'émission et le point de réception formant un centre de phase. Le procédé de détermination de la vitesse de déplacement du véhicule naval comprend en outre une étape de mesure du déplacement du centre de phase.

Lors d'une deuxième étape, on détermine un premier centre de phase disposé suivant un premier axe et un deuxième centre de phase disposé suivant un deuxième axe au-dessus du premier axe. Lors d'une étape ultérieure, on détermine l'angle d'assiette relative au fond formé entre une droite perpendiculaire aux axes des centres de phase et une droite perpendiculaire au fond marin, on détermine l'angle de visée, et l'on détermine la vitesse de déplacement du véhicule en fonction desdits angles déterminés.

Dans un mode de réalisation, on réceptionne par au moins deux moyens de réception distincts ledit signal acoustique émis par le moyen d'émission et réfléchi par le fond marin, chaque lieu géométrique milieu entre le point d'émission et chaque point de réception formant un centre de phase.

Avantageusement, pour déterminer l'angle d'assiette relative au fond, on compare les centres de phase des deux moyens de réception pour une seule émission et on retient la paire de centres de phase pour laquelle la corrélation est maximale, on mesure la distance entre le deuxième centre de phase et la projection orthogonale du premier centre de phase sur le deuxième axe.

Pour déterminer la vitesse de déplacement du véhicule, on peut calculer un vecteur vitesse selon l'axe longitudinal en fonction de la projetée sur l'axe longitudinal de ladite distance entre les deux centres de phase et la durée entre les deux émissions, la projetée sur l'axe longitudinal de ladite distance entre les deux centres de phase étant fonction de l'angle d'assiette relative au fond

Avantageusement, pour déterminer la vitesse de déplacement du véhicule, on calcule un vecteur vitesse selon l'axe de visée en fonction de la projetée du déplacement sur l'axe de visée, la projetée du déplacement sur l'axe de visée étant fonction de l'angle d'assiette relative au fond, de l'angle de visée et de la longueur connue de la base interférométrique.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue très schématique d'un système sonar selon un mode de réalisation de l'invention ;
- la figure 2 montre la position de l'antenne linéaire du système sonar selon la figure 1 par rapport au fond marin ;
- la figure 3 représente dans le plan XZ les centres de phase de chaque moyen de réception de la figure 1, respectivement suivant un premier axe et un deuxième axe ;
- la figure 4 représente dans le plan YZ les centres de phase de chaque moyen de réception de la figure 1;
- la figure 5 représente les centres de phase des moyens de réception, comprenant chacun une pluralité de récepteurs ; et
- la figure 6 illustre un organigramme d'un procédé de détermination de la vitesse de déplacement du véhicule naval.

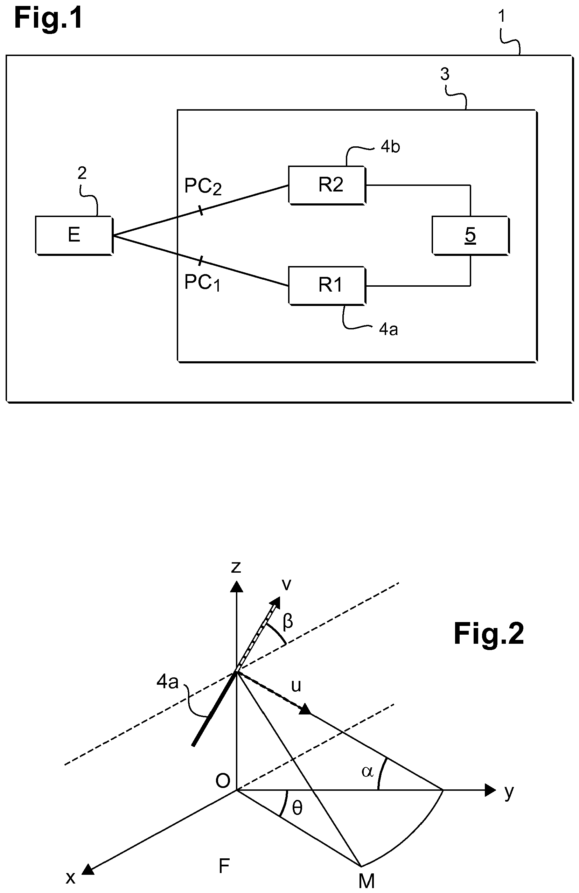

Dans la suite de la description, les termes « longitudinal », « transversal », « avant », « arrière », « gauche » et « droite », s'entendent par rapport au repère orthogonal usuel des véhicules navals, représenté sur la figure 1, et comprenant :

- un axe longitudinal X, dans le plan du fond marin et dirigé de l'arrière vers l'avant du véhicule ;
- un axe transversal Y, également dans le plan du fond marin, perpendiculaire à l'axe X et dirigé de droite à gauche du véhicule se déplaçant vers l'avant ;
- un axe Z, orthogonal aux axes X et Y et perpendiculaire au plan du fond marin.

Tel qu'il est illustré de manière très schématique sur la figure 1, un système sonar, référencé 1 dans son ensemble, est destiné à être porté par un véhicule naval (non représenté), tel que par exemple un véhicule sous-marin ou de surface de surface. Le système sonar 1 comprend à un point d'émission E un moyen d'émission 2 d'un signal acoustique et un dispositif 3 de détermination de la vitesse de déplacement du véhicule naval par rapport au fond marin comprenant un dispositif de traitement de données 5.

Le dispositif 3 de détermination de la vitesse de déplacement du véhicule naval par rapport au fond marin est de type loch acoustique à corrélation et comporte deux moyens de réception 4a, 4b du signal acoustique émis par le moyen d'émission 2 et réfléchi sur le fond marin.

Les moyens de réception 4a, 4b sont par exemple des capteurs disposés sur une antenne réseau de sorte que le deuxième moyen de réception 4b soit obtenu par une translation fictive du premier moyen de réception 4a perpendiculairement à son axe de manière à former un interféromètre. Par exemple, les moyens de réception 4a, 4b sont disposés l'un au-dessus de l'autre suivant l'axe Z (figure 2).

Pour chaque paire d'émetteur/récepteur 2/4a et 2/4b, on définit un centre de phase PC₁, PC₂ correspondant au point géométrique milieu entre le point d'émission E du signal acoustique et chaque point de réception R₁, R₂.

Les données reçues par les deux moyens de réception 4a, 4b sont ensuite envoyées et traitées par le dispositif de traitement de données 5, afin de calculer la vitesse de déplacement du véhicule naval.

On notera que le moyen d'émission peut être disposé directement sur l'antenne réseau ou à un autre endroit du véhicule naval.

La figure 2 illustre la position du système sonar 1 porté par le véhicule naval par rapport au fond marin F. Par soucis de clarté, on notera que seul le premier moyen de réception 4a a été représenté sur la figure 2. On supposera ici, à titre non limitatif, que le premier moyen de réception 4a est porté par une antenne réseau linéaire.

Tel qu'illustré sur la figure 2, le fond marin référencé F dans son ensemble, supposé plan pour les distances considérées, se trouve dans le plan XY formé par les axes longitudinal X et transversal Y.

Lorsque le moyen d'émission 2 émet au point d'émission E un signal acoustique suivant la direction de visée u, correspondant à une direction perpendiculaire à l'axe de l'antenne réseau 4a et dirigée vers le fond marin F. Le signal est réfléchi par des diffuseurs M situés sur le fond marin F. Chaque droite OM de chaque diffuseur M forme un angle θ avec l'axe transversal Y. L'écho du fond marin correspond au résultat de l'interférence de tous les diffuseurs M.

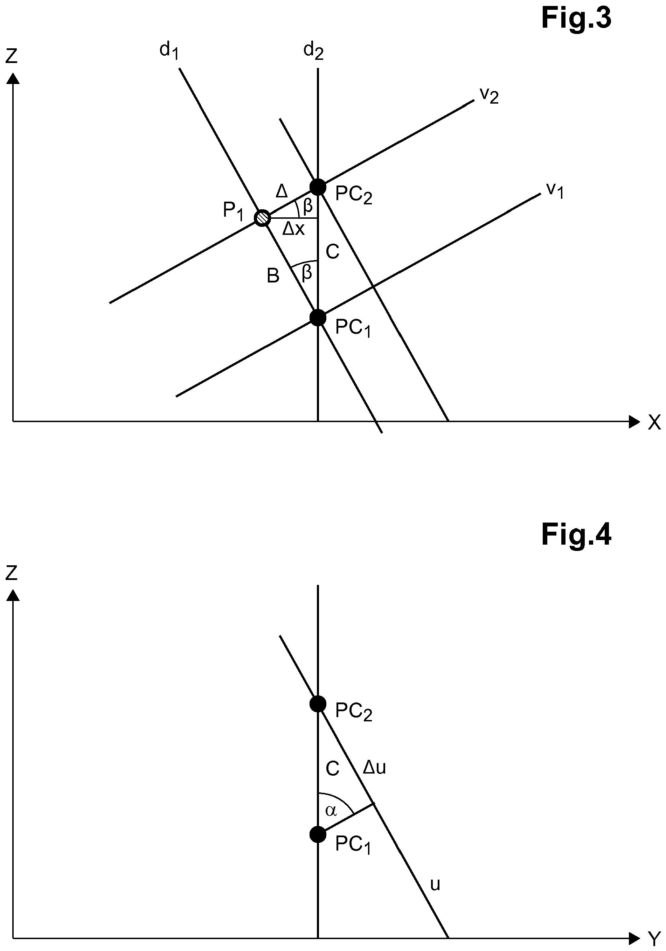

Le premier moyen de réception 4a de l'antenne réseau se trouve dans le plan XZ, formé par les axes longitudinal X et vertical Z et forme un angle β, appelé assiette relative au fond marin, avec le plan XY du fond marin F. En d'autres termes, l'angle d'assiette relative β correspond à l'angle formé entre une première droite d₁ (visible sur la figure 3) perpendiculaire l'axe v des moyens de réception 4a, 4b et une deuxième droite d₂ (visible sur la figure 3) perpendiculaire au fond marin F.

L'angle formé entre l'axe de la direction de visée u et l'axe transversal Y est appelé l'angle de visée α.

Sur la figure 3 sont représentés les centres de phase PC₁, PC₂ respectifs de chaque moyen de réception 4a, 4b, respectivement suivant un premier axe v₁ et un deuxième axe v₂. Les deux axes v₁ et v₂ sont parallèles entre eux de sorte que les deux centres de phase PC₁, PC₂ soient situés l'un au-dessus de l'autre suivant un axe qui est Z dans le cas particulier représenté mais qui pourrait être toute autre direction dans le plan perpendiculaire à l'axe commun des deux moyens de réception.

Le deuxième centre de phase PC₂ peut être considéré comme la déplacée du premier centre de phase PC₁ par une translation fictive selon un vecteur connu, orienté perpendiculairement à l'axe v₁ du premier moyen de réception 4a et de longueur B connue.

On peut considérer que les deux moyens de réceptions 4a, 4b des signaux forment une antenne interférométrique.

Un déplacement fictif Δ du premier centre de phase PC₁ du premier moyen de réception 4a conduit, pour chaque diffuseur M à un déphasage, égal à la projection de ce déplacement dans la direction de chaque diffuseur.

Le déplacement Δ correspond aux projections sur les axes X, Y et Z. Ainsi, pour un déplacement Δx le long de l'axe X, on obtient le déphasage suivant :

$$\Phi x = 2k\Delta x \cos\alpha \sin\theta \qquad \textbf{(Equation 1)}$$

Pour un déplacement Δy le long de l'axe Y, on obtient le déphasage suivant :

$$\Phi y = 2k\Delta y \cos\alpha \qquad \textbf{(Equation 2)}$$

Pour un déplacement Δz le long de l'axe Z, on obtient le déphasage suivant :

$$\Phi z = -2k\Delta z \sin\alpha \qquad \textbf{(Equation 3)}$$

Où k est le nombre d'onde.

Seul le déphasage suivant l'axe X dépend de l'angle θ.

Les centres de phase PC₁, PC₂ entre deux impulsions ne pouvant se déplacer que parallèlement aux moyens de réception, il est donc nécessaire de connaitre l'assiette relative β afin de calculer le déplacement suivant l'axe X et

donc son déphasage :

$$\Delta x = \Delta \cos \beta \qquad \qquad \textbf{(Equation 4)}$$

Où le déplacement $\Delta$ est mesuré par des moyens qui sont connus et ne seront pas davantage décrits.

Le déphasage $\Phi$ donné par la paire de centres de phase au pic d'inter-corrélation des échos de cette paire permet de déterminer le déplacement $\Delta u$ projeté suivant l'axe de visée u par l'équation suivante :

$$\Delta u = \frac{\Phi}{2k} \qquad \qquad \textbf{(Equation 5)}$$

L'angle de visée $\alpha$ est donc lui aussi nécessaire pour interpréter le résultat de la corrélation temporelle.

On notera que dans les lochs acoustiques à corrélation actuels, la projection du déplacement $\Delta x$ des centres de phase suivant l'axe X n'est pas calculée, de sorte que lorsque l'antenne n'est pas parallèle au fond marin, la vitesse de déplacement déterminée par de tels lochs est erronée. Sachant que l'assiette relative $\beta$ peut atteindre des valeurs plus ou moins importantes, avec une assiette $\beta$ de 10°, la valeur de la vitesse projetée selon l'axe X se voit attribuer une erreur de plus de 1.5%.

Or, par construction, on connait la distance B entre le premier centre de phase $PC_1$ et sa projetée $P_1$ sur le deuxième axe $v_2$. Dans la suite de la description, B est considérée comme la longueur de la base interférométrique. En effet, comme cela est indiqué précédemment, on considère le deuxième moyen de réception 4b et donc son centre de phase $PC_2$ comme la déplacée du premier moyen de réception 4a et donc son centre de phase $PC_1$ par une translation fictive selon un vecteur connu, orienté perpendiculairement au premier axe $v_1$ et de longueur B connue de la base interférométrique.

Ainsi, par projection sur l'axe longitudinal X du déplacement fictif des centres de phase $PC_1$, $PC_2$, on obtient l'équation suivante:

$$\Delta x = B \sin \beta \qquad \qquad \textbf{(Equation 6)}$$

Par définition, la projection $\Delta x$ selon l'axe longitudinal X du déplacement fictif des centres de phase $PC_1$, $PC_2$ étant égale, on en déduit l'angle d'assiette relative $\beta$ :

$$\beta = \tan^{-1}(\frac{\Delta}{B}) \qquad \qquad \textbf{(Equation 7)}$$

Une fois l'assiette relative $\beta$ calculée, on peut déterminer la valeur de la projection $\Delta x$ selon l'axe longitudinal X du déplacement $\Delta$ des centres de phase $PC_1$, $PC_2$. On notera que le déplacement $\Delta$ correspond également à la distance entre le deuxième centre de phase $PC_2$ et la projection orthogonale $P_1$ du premier centre de phase $PC_1$ sur le deuxième axe $v_2$.

La précision de la détermination de l'assiette relative est proportionnelle à la précision de la mesure du déplacement $\Delta$ et inversement proportionnelle à la longueur B. De plus, la mesure du déplacement $\Delta$ est d'autant plus précise que le faisceau d'émission est étendu angulairement. En prenant par exemple un faisceau de 25°, la précision du déplacement $\Delta$ est de l'ordre de $\frac{\lambda}{20}$ et la précision de la distance B de l'ordre de 10$\lambda$, de sorte que l'on obtient une précision de l'assiette relative de l'ordre de $\frac{1}{200}$ rad, soit 0.25°.

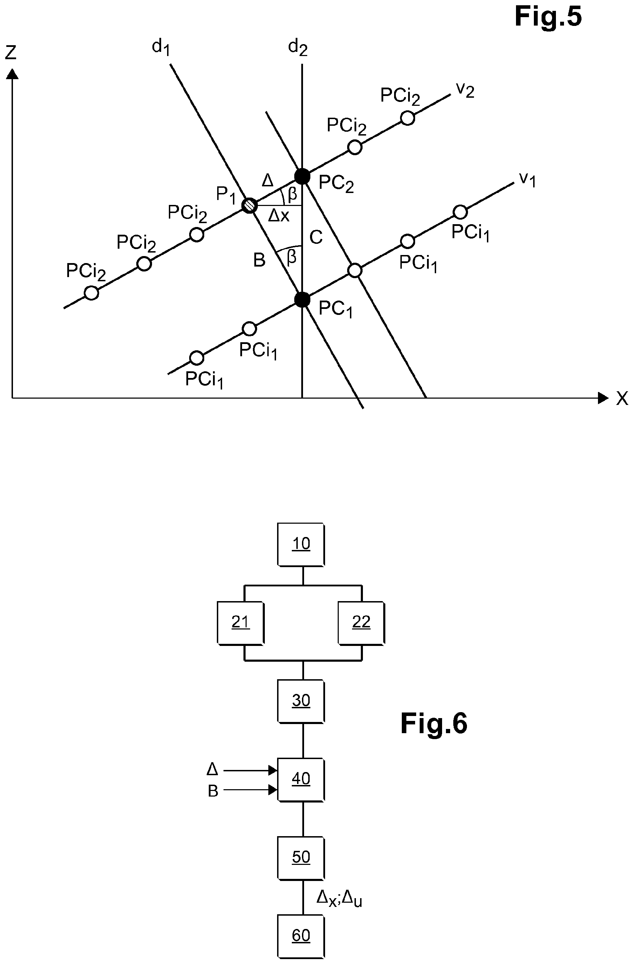

En variante, on pourrait prévoir que chaque moyen de réception 4a, 4b comprenne un nombre de centres de phase PC supérieur à un, tel que visible sur la figure 5 ou que le nombre de centres de phase d'un des moyens de réceptions soit différent du nombre de centres de phase de l'autre moyen de réception.

Une fois que l'assiette relative $\beta$ est déterminée par l'équation 7, on peut déterminer l'angle de visée $\alpha$ selon l'équation suivante :

$$\sin \alpha = \frac{\Delta u}{C} = \Delta u \frac{\cos \beta}{B} \qquad \textbf{(Equation 8)}$$

La précision de l'angle de visée $\alpha$ est de l'ordre de $\frac{1}{100}$ rad, soit 0.5°.

Il est donc possible de calculer la composante de la vitesse $V_x$ selon l'axe X en fonction de la projetée sur l'axe X du déplacement $\Delta x$ entre deux centres de phase $PC_1$, $PC_2$ pendant une durée $\Delta t$ entre l'émission de l'onde et sa réception suivant l'équation suivante :

$$Vx = \frac{\Delta x}{\Delta t} \qquad \textbf{(Equation 9)}$$

Sur la figure 5 sont représentés les centres de phase $PCi_1$, $PCi_2$ de chaque moyen de réception 4a, 4b, comprenant chacun une pluralité de récepteurs et donc définissant chacun une pluralité de centres de phase PCi. On applique ici la méthode des lochs acoustique à corrélation à centres de phase déplacés dits « DPCA », afin de comparer les échos de fond marin de toutes les paires de centres de phase et d'utiliser la paire de centres de phase pour laquelle la corrélation des échos de fond marin est maximale afin de déterminer la vitesse de déplacement du véhicule naval.

Une fois la paire de centres de phase sélectionnée, on détermine les deux angles $\beta$ et $\alpha$ de manière identique à ce qui est décrit précédemment.

On peut répéter ces opérations pour de nombreuses paires de centre de phase afin d'augmenter davantage la précision de l'assiette relative $\beta$ et la précision de l'angle de visée $\alpha$. Par exemple, en prenant vingt-cinq paires de centres de phase, on peut réduire la précision à 0.1°.

A titre d'exemple non limitatif, les moyens de réception peuvent chacun comprendre une antenne linéaire. On obtient ainsi une antenne interférométrique formée par deux antennes linéaires parallèles entre elles. Chaque antenne linéaire comprend au moins un centre de phase PC afin de déterminer les deux angles $\beta$ et $\alpha$ selon le procédé décrit précédemment. En variante, on pourrait disposer un nombre d'antennes linéaires supérieur à deux.

Dans un autre mode de réalisation non représenté, on pourrait utiliser au moins une antenne supplémentaire perpendiculaire aux deux moyens de réception parallèles. A titre d'exemple non limitatif, il est possible de former une antenne supplémentaire perpendiculaire aux deux moyens de réception en utilisant un nombre de moyens de réception supérieur à deux et chacun des moyens de réception ayant un centre de phase.

Dans un autre mode de réalisation non représenté, on pourrait utiliser un mode d'émission particulier afin d'augmenter sa performance. On utilise à cet effet au moins deux émetteurs situés aux deux extrémités d'une antenne permettant ainsi de synthétiser un déplacement de l'émetteur entre deux émissions. Ce mode d'émission permet d'augmenter le nombre de paires de centre de phase utilisés et ainsi la précision du loch. On peut aussi synthétiser des vitesses de déplacements différents en utilisant différentes paires d'émissions dans des bandes spectrales disjointes et en faisant varier d'une bande à l'autre le déplacement et la durée entre les deux émissions.

Dans une autre variante de l'invention, le dispositif de mesure pourrait comprendre deux antennes planaires à centres de phase superposés, une antenne dite supérieure et une antenne dite inférieure.

Dans une autre variante de l'invention, afin de déterminer la mesure de l'assiette relative, on détermine les deux angles, dits d'assiette et de gîte relative, formés entre une première droite perpendiculaire au plan commun des moyens de réception et une deuxième droite perpendiculaire au fond marin F. Ces deux angles sont déterminés à partir des deux distances, mesurées dans deux directions perpendiculaires du plan commun aux deux antennes, entre le deuxième centre de phase et la projection orthogonale sur la deuxième antenne du premier centre de phase. Dans cette variante, il peut être nécessaire de déplacer les moyens de réception des deux antennes planaires afin d'éviter le masquage d'une antenne par l'autre. Afin que les centres de phase restent superposés, il peut aussi être nécessaire synthétiser un déplacement en sens inverse de l'émission, en utilisant deux émetteurs distants du déplacement souhaité comme décrit précédemment.

En variante, on pourrait également disposer de deux dispositifs de mesure 3 tels que décrits précédemment, par exemple un à bâbord du véhicule naval et l'autre à tribord, afin d'avoir des directions de visée u indépendantes et d'augmenter la précision de la détermination de la vitesse de déplacement.

On pourrait également disposer un dispositif de mesure supplémentaire à visée frontale. La vitesse de déplacement peut alors être intégrée dans un filtre de navigation avec d'autres mesures, incluant par exemple une centrale inertielle. On appelle «centrale inertielle », tout équipement embarqué sur un véhicule naval comprenant des capteurs d'accélération et de rotation et un système de traitement des données permettant de déterminer en temps réel la position du véhicule, son orientation ainsi que les composantes de la vitesse de déplacement du véhicule. La centrale inertielle peut par exemple comprendre un gyroscope afin de déterminer la position angulaire du véhicule naval.

Dans un autre mode de réalisation non représenté, on pourrait utiliser au moins deux antennes synthétiques interférométriques, chacune formée à partir de deux antennes linéaires physiques superposées. Une première antenne synthétique peut être disposée à bâbord et la deuxième antenne synthétique peut être disposée à tribord du véhicule naval. On peut ainsi mesurer le déplacement du véhicule naval entre deux passes consécutives sur la même zone de fond et donc recaler ces passes de manière très précise, par exemple pour détecter des changements entres les passes. Par « antenne synthétique », on entend tout système comprenant au moins une antenne physique munie de N récepteurs et un système de traitement du signal dans lequel on utilise les signaux reçus par l'antenne physique à des instants et donc à des emplacements successifs pour obtenir une résolution équivalent à celle d'une antenne virtuelle correspondant à la longueur parcourue par l'antenne physique pendant ces différents instants. En d'autres termes, on forme une antenne virtuelle à partir des différentes positions spatiales d'une antenne physique. Lorsque le déplacement nominal du porteur est colinéaire à l'antenne physique, on obtient une antenne linéaire synthétique.

L'organigramme représenté sur la figure 6 illustre un exemple de procédé mis en oeuvre par le dispositif de traitement des données 5 afin de calculer la vitesse de déplacement du véhicule naval.

Après une étape 10 d'émission d'un signal acoustique par le moyen d'émission 2, on reçoit en deux points de réception R1, R2, respectivement aux étapes 21 et 22, l'écho du signal réfléchi sur le fond marin F.

On définit, à l'étape 30, le centre de phase $PC_1$, $PC_2$ entre chaque paire d'émetteur/récepteur. Dans le cas, par exemple, d'une antenne linéaire comprenant une pluralité de moyens de réception, on détermine la paire de centres de phase pour laquelle la corrélation des échos de fond marin est maximale par comparaison des échos de fond marin de toutes les paires de centres de phase.

A l'étape 40, on calcule l'assiette relative $\beta$ en fonction de la distance B connue entre le premier centre de phase $PC_1$ et sa projeté $P_1$ sur le deuxième axe $v_2$ et en fonction du déplacement $\Delta$ mesuré à l'aide de la méthode de corrélation acoustique selon les équations 4 et 6 précédentes :

$$\Delta x = \Delta \cos \beta = B \sin \beta \Rightarrow \beta = \tan^{-1}(\frac{\Delta}{B})$$

Une fois l'assiette relative $\beta$ calculée, on peut déterminer, à l'étape 50, la valeur de la projection $\Delta x$ selon l'axe longitudinal X du déplacement $\Delta$ des centres de phase $PC_1$, $PC_2$ et la valeur de la projection $\Delta u$ selon l'axe de visée u du déplacement $\Delta$ des centres de phase $PC_1$, $PC_2$ en fonction de l'angle de visée $\alpha$ calculé à l'équation 8.

On en déduit ensuite, à l'étape 60, la valeur des composantes de la vitesse Vx et Vu respectivement selon l'axe longitudinal X et l'axe de visée u :

$$Vx = \frac{\Delta x}{\Delta t} \qquad\qquad \textbf{(Equation 9)}$$

$$Vu = \frac{\Delta u}{\Delta t} \qquad\qquad \textbf{(Equation 10)}$$

Grace au dispositif et au procédé décrit, on peut déterminer, sans biais, la valeur de deux composantes de la vitesse de déplacement du véhicule naval, à savoir la vitesse $V_u$ selon l'axe de visée u définie grâce à la projection $\Delta u$ selon l'axe de visée u de déplacement $\Delta$ et la vitesse $V_x$ selon l'axe longitudinal X définie grâce à la projection $\Delta x$ selon l'axe longitudinal X du déplacement $\Delta$.

On obtient ainsi un loch à corrélation acoustique amélioré par l'intégration d'une fonction interférométrique permettant de déterminer localement les angles d'orientation de l'antenne réseau par rapport au fond ainsi que l'angle de visée et d'en déduire la vitesse de déplacement du véhicule par rapport au fond marin. Ainsi, on élimine les erreurs de projection du vecteur vitesse qui sont la principale source de biais dans les lochs actuels.

En effet, la localisation angulaire très précise permise par le dispositif de détermination de la vitesse selon l'invention permet de diminuer voire supprimer les erreurs de projection des lochs à corrélation acoustique actuels sans recourir à l'utilisation de faisceaux excessivement fins. L'invention permet d'améliorer considérablement la précision et la portée des lochs à corrélation acoustiques actuels.

**Revendications**

1. Sonar porté par un véhicule naval, ledit sonar comprenant au moins un dispositif de détermination (3) de la vitesse de déplacement du véhicule naval par rapport au fond marin (F), de type loch à corrélation acoustique, comportant au moins un moyen d'émission (2) d'un signal acoustique et au moins deux moyens de réception (4a, 4b) dudit signal acoustique émis et réfléchi sur le fond marin (F) ou au moins deux moyens d'émission d'un signal acoustique et au moins un moyen de réception dudit signal acoustique émis et réfléchi sur le fond marin (F), **caractérisé en ce que**:

   au moins deux centres de phases (PC1, PC2) sont formés, un lieu géométrique milieu entre le point d'émission (E) et le point de réception (R1, R2) formant un centre de phase (PC1, PC2), de façon que le premier centre de phase (PC1) est disposé suivant un premier axe (V1) et le deuxième centre de phase (PC2) est disposé suivant un deuxième axe (V2) parallèle au premier axe (V1),
   et **en ce que**:

   ledit dispositif (3) de détermination de la vitesse de déplacement du véhicule naval comprend:

   des moyens de mesure du déplacement ($\Delta$) du centre de phase,
   des moyens de détermination de l'angle d'assiette relative au fond ($\beta$) formé entre une droite (d1) perpendiculaire aux axes (V1, V2) des centres de phase (PC1, PC2) et une droite perpendiculaire (d2) au fond marin (F),
   des moyens de détermination de l'angle de visée ($\alpha$), et
   des moyens de détermination de la vitesse de déplacement du véhicule en fonction desdits angles déterminés ($\beta$, $\alpha$).

2. Sonar selon la revendication 1, comprenant un moyen d'émission du signal acoustique et deux moyens de réception dudit signal acoustique émis et réfléchi sur le fond marin (F), chaque lieu géométrique milieu entre le point d'émission et chaque point de réception (R1, R2) formant un centre de phase (PC1, PC2).

3. Sonar selon la revendication 2, dans lequel les moyens de détermination de l'angle d'assiette relative au fond ($\beta$) comprennent des moyens de comparaison des centres de phase (PC1, PC2) des deux moyens de réception (R1, R2) pour une seule émission et des moyens de sélection de la paire de de centres de phase pour lesquels la corrélation est maximale, des moyens de mesure d'une distance entre le deuxième centre de phase (PC2) et la projection (P1) orthogonale du premier centre de phase (PC1) sur le deuxième axe (V2), l'angle d'assiette relative ($\beta$) étant fonction de ladite distance entre le deuxième centre de phase et la projection et de la longueur (B) de la base interférométrique.

4. Sonar selon la revendication 3, dans lequel les moyens de détermination de la vitesse de déplacement du véhicule comprennent des moyens de calcul d'un vecteur vitesse (Vx) selon l'axe longitudinal (X) en fonction de la projetée ($\Delta$x) sur l'axe longitudinal (X) d'une distance entre les centres de phase (PC1, PC2) et la durée ($\Delta$t) entre deux émissions, la projetée ($\Delta$x) sur l'axe longitudinal de ladite distance entre les deux centres de phase (PC1, PC2) étant fonction de l'angle d'assiette relative ($\beta$).

5. Sonar selon la revendication 4, dans lequel les moyens de détermination de la vitesse de déplacement du véhicule comprennent des moyens de calcul de la projetée ($\Delta$u) du déplacement ($\Delta$) sur l'axe de visée (u) en fonction de l'angle d'assiette relative ($\beta$), de l'angle de visée ($\alpha$) et de la longueur (B) de la base interférométrique.

6. Sonar selon l'une quelconque des revendications précédentes, comprenant un nombre de moyens de réception supérieur à deux et des moyens de combinaison des paires de centres de phase (PC1, PC2).

7. Sonar selon l'une quelconque des revendications précédentes, dans lequel les moyens de réception sont des antennes de type linéaire, planaire, conformée ou volumétrique.

8. Sonar selon la revendication 7, dans lequel les moyens de réception comprennent deux antennes planaires à centres de phase superposés.

9. Sonar selon l'une quelconque des revendications précédentes, dans lequel les moyens de réception sont des antennes de type physique.

**10.** Sonar selon l'une quelconque des revendications 1 à 8, dans lequel les moyens de réception sont des antennes de type synthétique.

**11.** Sonar selon la revendication 10, dans lequel l'antenne synthétique est formée par deux antennes physiques en configuration interférométrique.

**12.** Sonar selon l'une quelconque des revendications précédentes comprenant au moins deux dispositifs de détermination de la vitesse de déplacement du véhicule naval par rapport au fond marin selon l'une quelconque de revendications précédentes, chaque dispositif de détermination de la vitesse de déplacement comprenant des axes de visée indépendants.

**13.** Système comprenant un sonar selon l'une quelconque des revendications précédentes et une centrale inertielle.

**14.** Procédé de détermination de la vitesse de déplacement d'un véhicule naval par rapport au fond marin dans un sonar comportant un dispositif de détermination de la vitesse de déplacement, de type loch à corrélation acoustique, dans lequel on émet au moins un signal acoustique, et l'on réceptionne par au moins deux moyens de réception ledit signal acoustique émis et réfléchi sur le fond marin, ou on émet au moins deux signaux acoustiques et l'on réceptionne par au moins un moyen de réception desdits signaux acoustiques émis et réfléchis sur le fond marin, afin qu'au moins deux centres de phases (PC1, PC2) soient formés, un lieu géométrique milieu entre le point d'émission (E) et le point de réception (R1, R2) formant un centre de phase (PC1, PC2), le procédé de détermination de la vitesse de déplacement du véhicule naval comprenant une étape de mesure du déplacement ($\Delta$) du centre de phase, **caractérisé en ce que** l'on détermine un premier centre de phase disposé suivant un premier axe (V1) et un deuxième centre de phase disposé suivant un deuxième axe (V2) au-dessus du premier axe (V1) et **en ce qu'**il comprend une étape (40) de détermination de l'angle d'assiette relative ($\beta$) formé entre une droite (d1) perpendiculaire aux axes (V1, V2) des centres de phase (PC1, PC2) et une droite (d2) perpendiculaire au fond marin, une étape (50) de détermination de l'angle de visée ($\alpha$), et une étape (60) de détermination de la vitesse de déplacement du véhicule en fonction desdits angles déterminés ($\beta$, $\alpha$).

**15.** Procédé selon la revendication 14, dans lequel on réceptionne par au moins deux moyens de réception distincts ledit signal acoustique émis par le moyen d'émission et réfléchi par le fond marin, chaque lieu géométrique milieu entre le point d'émission et chaque point de réception (R1, R2) formant un centre de phase (PC1, PC2).

**16.** Procédé selon la revendication 15, dans lequel pour déterminer l'angle d'assiette relative au fond ($\beta$), on compare des centres de phase des deux moyens de réception pour une seule émission et on retient la paire de centres de phase (PC1, PC2) pour laquelle la corrélation est maximale, on mesure une distance entre le deuxième centre de phase (PC2) et la projection orthogonale (P1) du premier centre de phase (PC1) sur le deuxième axe (V2) et la longueur (B) de la base interférométrique.

**17.** Procédé selon la revendication 15 ou 16, dans lequel pour déterminer la vitesse de déplacement du véhicule, on calcule un vecteur vitesse (Vx) selon l'axe horizontal (X) en fonction de la projetée ($\Delta X$) sur l'axe longitudinal (X) d'une distance entre les deux centres de phase (PC1, PC2) et la durée ($\Delta t$) entre deux émissions, la projetée ($\Delta X$) sur l'axe longitudinal (X) de ladite distance entre les deux centres de phase (PC1, PC2) étant fonction de l'angle d'assiette relative ($\beta$).

**18.** Procédé selon la revendication 17, dans lequel pour déterminer la vitesse de déplacement du véhicule, on calcule un vecteur vitesse selon l'axe de visée en fonction de la projetée ($\Delta u$) du déplacement ($\Delta$) sur l'axe de visée (u), la projetée ($\Delta u$) du déplacement sur l'axe de visée (u) étant fonction de l'angle d'assiette relative ($\beta$), de l'angle de visée (a) et de la longueur (B) de la base interférométrique.

## Patentansprüche

**1.** Sonar, das von einem nautischen Fahrzeug getragen wird, wobei das Sonar zumindest eine Bestimmungsvorrichtung (3) zum Bestimmen der Bewegungsgeschwindigkeit des nautischen Fahrzeugs bezüglich des Meeresbodens (F) aufweist, die als Log mit akustischer Korrelation ausgeführt ist, enthaltend zumindest eine Sendeeinrichtung (2) zum Senden eines akustischen Signals und zumindest zwei Empfangseinrichtungen (4a, 4b) zum Empfangen des ausgesendeten und am Meeresboden (F) reflektierten akustischen Signals, oder zumindest zwei Sendeeinrichtungen zum Senden eines akustischen Signals und zumindest eine Empfangseinrichtung zum Empfangen des ausgesendeten und am Meeresboden (F) reflektierten akustischen Signals,
**dadurch gekennzeichnet, dass**
zumindest zwei Phasenzentren (PC1, PC2) gebildet sind, wobei ein geometrischer Ort in der Mitte zwischen dem Sendepunkt (E) und dem Empfangspunkt (R1, R2) ein Phasenzentrum (PC1, PC2) bildet, so dass das erste Phasenzentrum (PC1) entlang einer ersten Achse (V1) angeordnet ist und das zweite Phasenzentrum (PC2) entlang einer zweiten Achse (V2) angeordnet ist, die parallel zur ersten Achse (V1) verläuft,
und dass
die Bestimmungsvorrichtung (3) zum Bestimmen der Bewegungsgeschwindigkeit des nautischen Fahrzeugs enthält:

Messmittel zum Messen der Bewegung ($\Delta$) des Phasenzentrums,
Bestimmungsmittel zum Bestimmen des Neigungswinkels bezüglich des Bodens ($\beta$), der zwischen einer Geraden (d1) senkrecht zu den Achsen (V1, V2) der Phasenzentren (PC1, PC2) und einer Geraden (d2) senkrecht zum Meeresboden (F) gebildet ist,
Bestimmungsmittel zum Bestimmen des Betrachtungswinkels ($\alpha$), und
Bestimmungsmittel zum Bestimmen der Bewegungsgeschwindigkeit des Fahrzeugs in Abhängigkeit von den bestimmten Winkeln ($\beta$, $\alpha$).

2. Sonar nach Anspruch 1, enthaltend eine Sendeeinrichtung zum Senden des akustischen Signals und zwei Empfangseinrichtungen zum Empfangen des ausgesendeten und am Meeresboden (F) reflektierten akustischen Signals, wobei jeder geometrische Ort in der Mitte zwischen dem Sendepunkt und jedem Empfangspunkt (R1, R2) ein Phasenzentrum (PC1, PC2) bildet.

3. Sonar nach Anspruch 2, wobei die Bestimmungsmittel zum Bestimmen des Neigungswinkels bezüglich des Bodens ($\beta$) Vergleichsmittel zum Vergleichen der Phasenzentren (PC1, PC2) der beiden Empfangseinrichtungen (R1, R2) bei einer einzigen Signalsendung und Auswahlmittel zum Auswählen des Paares von Phasenzentren aufweisen, bei denen die Korrelation maximal ist, sowie Messmittel zum Messen einer Entfernung zwischen dem zweiten Phasenzentrum (PC2) und der orthogonalen Projektion (P1) des ersten Phasenzentrums (PV1) auf die zweite Achse (V2), wobei der relative Neigungswinkel ($\beta$) eine Funktion der Entfernung zwischen dem zweiten Phasenzentrum und der Projektion und der Länge (B) der interferometrischen Basis ist.

4. Sonar nach Anspruch 3, wobei die Bestimmungsmittel zum Bestimmen der Bewegungsgeschwindigkeit des Fahrzeugs Rechenmittel zum Berechnen eines Geschwindigkeitsvektors (Vx) entlang der Längsachse (X) in Abhängigkeit von der Projizierten ($\Delta$x) auf die Längsachse (X) einer Entfernung zwischen den Phasenzentren (PC1, PC2) und der Zeitdauer ($\Delta$t) zwischen zwei Signalsendungen enthalten, wobei die Projizierte ($\Delta$x) auf die Längsachse der Entfernung zwischen den beiden Phasenzentren (PC1, PC2) eine Funktion des relativen Neigungswinkels ($\beta$) ist.

5. Sonar nach Anspruch 4, wobei die Bestimmungsmittel zum Bestimmen der Bewegungsgeschwindigkeit des Fahrzeugs Rechenmittel zum Berechnen der Projizierten ($\Delta$u) der Bewegung ($\Delta$) auf die Betrachtungsachse (u) in Abhängigkeit von dem relativen Neigungswinkel ($\beta$), dem Betrachtungswinkel ($\alpha$) und der Länge (B) der interferometrischen Basis enthalten.

6. Sonar nach einem der vorangehenden Ansprüche, enthaltend eine Anzahl von Empfangseinrichtungen größer als zwei und Kombinationsmittel zum Kombinieren der Paare von Phasenzentren (PC1, PC2).

7. Sonar nach einem der vorangehenden Ansprüche, wobei die Empfangseinrichtungen Antennen sind, die als lineare, planare, konforme oder volumetrische Antennen ausgeführt sind.

8. Sonar nach Anspruch 7, wobei die Empfangseinrichtungen zwei planare Antennen mit übereinanderliegenden Phasenzentren aufweisen.

9. Sonar nach einem der vorangehenden Ansprüche, wobei die Empfangseinrichtungen als physikalische Antennen ausgeführt sind.

10. Sonar nach einem der Ansprüche 1 bis 8, wobei die Empfangseinrichtungen als synthetische Antennen ausgeführt sind.

11. Sonar nach Anspruch 10, wobei die synthetische Antenne aus zwei physikalischen Antennen in interferometrischer Konfiguration gebildet ist.

**12.** Sonar nach einem der vorangehenden Ansprüche, enthaltend zumindest zwei Bestimmungsvorrichtungen zum Bestimmen der Bewegungsgeschwindigkeit des nautischen Fahrzeugs bezüglich des Meeresbodens nach einem der vorangehenden Ansprüche, wobei jede Bestimmungsvorrichtung zum Bestimmen der Bewegungsgeschwindigkeit unabhängige Betrachtungsachsen hat.

**13.** System mit einem Sonar nach einem der vorangehenden Ansprüche und einer inertialen Messeinheit.

**14.** Verfahren zum Bestimmen der Bewegungsgeschwindigkeit eines nautischen Fahrzeugs bezüglich des Meeresbodens in einem Sonar, enthaltend eine Vorrichtung zum Bestimmen der Bewegungsgeschwindigkeit, die als Log mit akustischer Korrelation ausgeführt ist, wobei zumindest ein akustisches Signal ausgegeben wird und über zumindest zwei Empfangseinrichtungen das ausgesendete und am Meeresboden (F) reflektierte akustische Signal empfangen wird, oder zumindest zwei akustische Signale ausgegeben werden und über zumindest eine Empfangseinrichtung zum Empfangen der ausgesendeten und am Meeresboden (F) reflektierten akustischen Signale empfangen werden, damit zumindest zwei Phasenzentren (PC1, PC2) gebildet werden, wobei ein geometrischer Ort in der Mitte zwischen dem Sendepunkt (E) und dem Empfangspunkt (R1, R2) ein Phasenzentrum (PC1, PC2) bildet, wobei das Verfahren zum Bestimmen der Bewegungsgeschwindigkeit des nautischen Fahrzeugs einen Schritt des Messens der Bewegung ($\Delta$) des Phasenzentrums umfasst,
**dadurch gekennzeichnet, dass** ein erstes Phasenzentrum bestimmt wird, das entlang einer ersten Achse (V1) angeordnet ist, sowie ein zweites Phasenzentrum, das entlang einer zweiten Achse (V2) oberhalb der ersten Achse (V1) angeordnet ist,
und dass es einen Schritt (40) des Bestimmens des relativen Neigungswinkels ($\beta$) umfasst, der zwischen einer Geraden (d1) senkrecht zu den Achsen (V1, V2) der Phasenzentren (PC1, PC2) und einer Geraden (d2) senkrecht zum Meeresboden (F) gebildet ist, sowie einen Schritt (50) des
Bestimmens des Betrachtungswinkels ($\alpha$) und einen Schritt (60) des Bestimmens der Bewegungsgeschwindigkeit des Fahrzeugs in Abhängigkeit von den bestimmten Winkeln ($\beta$, $\alpha$).

**15.** Verfahren nach Anspruch 14, wobei über zumindest zwei separate Empfangseinrichtungen das von der Sendeeinrichtung ausgesendete und vom Meeresboden reflektierte akustische Signal empfangen wird, wobei jeder geometrische Ort in der Mitte zwischen dem Sendepunkt und jedem Empfangspunkt (R1, R2) ein Phasenzentrum (PC1, PC2) bildet.

**16.** Verfahren nach Anspruch 15, wobei zum Bestimmen des Neigungswinkels bezüglich des Bodens ($\beta$) Phasenzentren der beiden Empfangseinrichtungen bei einer einzigen Signalsendung verglichen werden und das Paar von Phasenzentren (PC, PC2) festgehalten wird, bei dem die Korrelation maximal ist, und eine Entfernung zwischen dem zweiten Phasenzentrum (PC2) und der orthogonalen Projektion (P1) des ersten Phasenzentrums (PC1) auf die zweite Achse (V2) und die Länge (B) der interferometrischen Basis gemessen werden.

**17.** Verfahren nach Anspruch15 oder 16, wobei zum Bestimmen der Bewegungsgeschwindigkeit des Fahrzeugs ein Geschwindigkeitsvektor (Vx) entlang der Längsachse (X) in Abhängigkeit von der Projizierten ($\Delta x$) auf die Längsachse (X) einer Entfernung zwischen den Phasenzentren (PC1, PC2) und der Zeitdauer ($\Delta t$) zwischen zwei Signalsendungen berechnet wird, wobei die Projizierte ($\Delta x$) auf die Längsachse (X) der Entfernung zwischen den beiden Phasenzentren (PC1, PC2) eine Funktion des relativen Neigungswinkels ($\beta$) ist.

**18.** Verfahren nach Anspruch 17, wobei zum Bestimmen der Bewegungsgeschwindigkeit des Fahrzeugs ein Geschwindigkeitsvektor entlang der Betrachtungsachse in Abhängigkeit von der Projizierten ($\Delta u$) der Bewegung ($\Delta$) auf die Betrachtungsachse (u) berechnet wird, wobei die Projizierte ($\Delta u$) der Bewegung auf die Betrachtungsachse (u) eine Funktion des relativen Neigungswinkels ($\beta$), des Betrachtungswinkels ($\alpha$) und der Länge (B) der interferometrischen Basis ist.

**Claims**

**1.** Sonar carried by a naval vehicle, said sonar comprising at least one device (3) for determining the speed of movement of the naval vehicle in relation to the sea bed (F), which device is of the acoustic correlation log type and comprises at least one means (2) for emitting an acoustic signal and at least two means (4a, 4b) for receiving said acoustic signal emitted and reflected on the sea bed (F), or at least two means for emitting an acoustic signal and at least one means for receiving said acoustic signal emitted and reflected on the sea bed (F), **characterised in that** at least two phase centers (PC1, PC2) are formed, a central geometric location between the emission point (E) and the reception point (R1, R2) forming a phase center (PC1, PC2) such that the first phase center (PC1) is arranged along a first axis (V1) and the second phase center (PC2) is arranged along a second axis (V2) parallel to the first axis (V1), and **in that** the device (3) for determining the speed of movement of the naval vehicle comprises means for measuring the movement ($\Delta$) of the phase center, means for determining the trim angle ($\beta$) relative to the sea bed formed between a straight line (d1) that is perpendicular to the axes (V1, V2) of the phase centers (PC1, PC2) and a straight line (d2) that is perpendicular to the sea bed (F), means for determining the angle of sight ($\alpha$), and means for determining the speed of movement of the vehicle on the basis of said determined angles ($\beta$, $\alpha$).

2. Sonar according to claim 1, comprising a means for emitting the acoustic signal and two means for receiving said acoustic signal emitted and reflected on the sea bed (F), each central geometric location between the emission point and each reception point (R1, R2) forming a phase center (PC1, PC2).

3. Sonar according to claim 2, wherein the means for determining the trim angle ($\beta$) relative to the sea bed comprise means for comparing the phase centers (PC1, PC2) of the two reception means (R1, R2) for a single emission, means for selecting the pair of phase centers for which the correlation is at a maximum, and means for measuring a distance between the second phase center (PC2) and the orthogonal projection (P1) of the first phase center (PC1) on the second axis (V2), the relative trim angle ($\beta$) being a function of said distance between the second phase center and the projection and on the length (B) of the interferometric baseline.

4. Sonar according to claim 3, wherein the means for determining the speed of movement of the vehicle comprise means for calculating a speed vector (Vx) along the longitudinal axis (X) as a function of the projection ($\Delta$x) on the longitudinal axis (X) of a distance between the phase centers (PC1, PC2) and the duration ($\Delta$t) between two emissions, the projection ($\Delta$x) on the longitudinal axis for said distance between the two phase centers (PC1, PC2) being a function of the relative trim angle ($\beta$).

5. Sonar according to claim 4, wherein the means for determining the speed of movement of the vehicle comprise means for calculating the projection ($\Delta$u) of the movement ($\Delta$) on the sight axis (u) as a function of the relative trim angle ($\beta$), the angle of sight ($\alpha$), and the length (B) of the interferometric baseline.

6. Sonar according to any one of the preceding claims, comprising a number of reception means greater than two and means for combining the pairs of phase centers (PC1, PC2).

7. Sonar according to any one of the preceding claims, wherein the reception means are linear, planar, conformal or volumetric antennas.

8. Sonar according to claim 7, wherein the reception means comprise two planar antennas having superimposed phase centers.

9. Sonar according to any one of the preceding claims, wherein the reception means are physical antennas.

10. Sonar according to any one of claims 1 to 8, wherein the reception means are synthetic antennas.

11. Sonar according to claim 10, wherein the synthetic antenna is formed by two physical antennas in an interferometric configuration.

12. Sonar according to any one of the preceding claims, comprising at least two devices for determining the speed of movement of the naval vehicle in relation to the sea bed according to any one of the preceding claims, each device for determining the speed of movement comprising independent sight axes.

13. System comprising a sonar according to any one of the preceding claims and an inertial navigation unit.

14. Method for determining the speed of movement of a naval vehicle in relation to the sea bed in a sonar comprisin g a device for determining the speed of movement, of the acoustic correlation log type, in which at least one acoustic signal is emitted and at least two reception means are used to receive said acoustic signal emitted and reflected on the sea bed, or at least two acoustic signals are emitted and at least one reception means is used to receive said acoustic signals emitted and reflected on the sea bed, so as to form at least two phase centers (PC1, PC2), a central geometric location between the emission point (E) and the reception point (R1, R2) forming a phase center (PC1, PC2), the method for determining the speed of movement of the naval vehicle comprising a step of measuring the movement (Δ) of the phase center, **characterised in that** a first phase center is arranged along a first axis (V1) and a second phase center is arranged along a second axis (V2) above the first axis (V1) are determined, and **in that** said method comprises a step (40) of determining the relative trim angle (β) formed between a straight line (d1) that is perpendicular to the axes (V1, V2) of the phase centers (PC1, PC2) and a straight line (d2) that is perpendicular to the sea bed, a step (50) of determining the angle of sight (α), and a step (60) of determining the speed of movement of the vehicle on the basis of said determined angles (β, α).

15. Method according to claim 14, wherein at least two separate reception means are used to receive said acoustic signal emitted by the emission means and reflected by the sea bed, each central geometric location between the emission point and each reception point (R1, R2) forming a phase center (PC1, PC2).

16. Method according to claim 15, wherein, in order to determine the trim angle (β) relative to the sea bed, the phase centers of the two reception means are compared for a single emission and the pair of phase centers (PC1, PC2) for which the correlation is at a maximum is retained, and the distance between the second phase center (PC2) and the orthogonal projection (P1) of the first phase center (PC1) on the second axis (V2) and the length (B) of the interferometric baseline are measured.

17. Method according to either claim 15 or claim 16, wherein, in order to determine the speed of movement of the vehicle, a speed vector (Vx) along the horizontal axis (X) is calculated on the basis of the projection (Δx) on the longitudinal axis (X) of a distance between the two phase centers (PC1, PC2) and the duration (Δt) between two emissions, the projection (Δx) on the longitudinal axis (X) for said distance between the two phase centers (PC1, PC2) being a function of the relative trim angle (β).

18. Method according to claim 17, wherein, in order to determine the speed of movement of the vehicle, a speed vector along the sight axis is calculated on the basis of the projection (Δu) of the movement (Δ) on the sight axis (u), the projection (Δu) for the movement on the sight axis (u) being a function of the relative trim angle (β), the angle of sight (α), and the length (B) of the interferometric baseline.

# Fig.1

# Fig.2

# Fig.3

# Fig.4

**Fig.5**

**Fig.6**

**EP 2 990 824 B1**

## RÉFÉRENCES CITÉES DANS LA DESCRIPTION

**Documents brevets cités dans la description**

- WO 8904975 A
- US 2004165479 A
- US 2014126333 A